# EUROPEAN PATENT APPLICATION

(11) **EP 3 640 177 A1**
(43) Date of publication of application: **22.04.2020**
(21) Application number: 18201465.4
(22) Date of filing: 19.10.2018
(51) Int. Cl.: B66B 1/30, B66B 5/02

(54) **POWER SUPPLY TO AC LOADS DURING POWER SOURCE FAILURE IN ELEVATOR SYSTEM**

(71) Applicant: Otis Elevator Company, Farmington, Connecticut 06032 (US)
(72) Inventor: Valdivia Guerrero, Virgilio, Cork City (IE); Diaz-Lopez, Daniel, Cork City (IE); Sanz Abia, Mario, Madrid 28919 (ES); Horbruegger, Herbert, 13507 Berlin (DE); Glessner, Stephan, 13507 Berlin (DE)
(74) Representative: Schmitt-Nilson Schraud Waibel Wohlfrom Patentanwälte Partnerschaft mbB

(57) **Abstract**

The invention relates to a power management system (1) for an elevator system (2). A power management system (1) for an elevator system (2) according to an exemplary embodiment of the invention comprises, a power converter (12) having input terminals coupled to an AC power source (11) supplying AC power to the power management system (1) and output terminals coupled to a common DC bus (38), the power converter (12) configured to convert the AC power from the AC power source (11) into DC power on the common DC bus (38) and vice versa; an AC load (22) coupled to the input terminals of the power converter (12); a second power source (26) for supplying DC power to the common DC bus (38); a power inverter (14) configured to invert the DC power on the common DC bus (38) into AC output power for driving an electric motor (16) of the elevator system (2); and a controller (24) configured to detect a failure of the AC power source (11) and, upon detection of the failure of the AC power source (11), to control the power converter (12) to invert the DC power on the common DC bus (38) into AC power to be supplied to the AC load (22) via the input terminals of the power converter (12).

## Description

The invention relates to power management in an elevator system, in particular, to a method and system for leveraging an elevator system to form a microgrid or a local grid.

In an elevator system an elevator car makes vertical movements to transport passengers between different floors in a building. An electric motor controlled by a power management system is used to drive the elevator car. Stable supply of electric power to the electric motor is important. In order to supply stable electric power to elevator systems, power management systems have been developed to employ various types of power sources.

It would be beneficial to provide an enhanced power management system to be used in an elevator system, in particular it would be beneficial to make use of electrical power generated from power sources of an elevator system for various purposes. It would also be beneficial to leverage an elevator system to form a microgrid or a local grid.

Exemplary embodiments of the invention include a power management system for an elevator system, comprising a power converter having input terminals coupled to an AC power source supplying AC power to the power management system and output terminals coupled to a common DC bus, the power converter configured to convert the AC power from the AC power source into DC power on the common DC bus and vice versa; an AC load coupled to the input terminals of the power converter; a second power source for supplying DC power to the common DC bus; a power inverter configured to invert the DC power on the common DC bus into AC output power for driving an electric motor of the elevator system; and a controller configured to detect a failure of the AC power source and, upon detection the failure of the AC power source, to control the power converter to invert the DC power on the common DC bus into AC power to be supplied to the AC load via the input terminals of the power converter.

Exemplary embodiments of the invention include an elevator system equipped with a power management system according to the embodiments of the present invention.

Exemplary embodiments of the invention include a method of power management in an elevator system, the method comprising supplying, by an AC power source, AC power to a power converter of a power management system, the power converter configured to convert the AC power into DC power on a common DC bus of the power management system and vice versa; supplying, by the AC power source, AC power to an AC load which is coupled between the AC power source and the power converter; detecting a failure of the AC power source; and upon detection of the failure of the AC power source, controlling the power converter to convert the DC power on the common DC bus to AC output power to be supplied to the AC load.

Exemplary embodiments of the invention allow for the integration of power sources for an elevator system and for other electrical systems of a building to which the elevator system belongs. In particular, electrical power from a second power source of an elevator system or electrical power regenerated by an electrical motor of the elevator system can be utilized for driving electrical loads of the building when there is a failure of an AC power source. Thus, additional hardware and wiring are unnecessary for the electrical loads of the building and thus cost reduction can be achieved. In particular, a power converter of the elevator system can be redirected to AC loads during a failure of the AC power source and thereby allowing leveraging the power converter to form a microgrid or a local grid. In addition, according to exemplary embodiments of the invention, an elevator system can be utilized as an uninterruptible power supply or a microgrid for the electrical loads of the building.

According to a further embodiment, the AC load may comprise an electrical load of the elevator system like elevator door operators, elevator lightings or an additional AC-fed power conversion stage that supplies several loads including back-up supplies used for rescue operation, etc. According to a further embodiment, the AC load may further comprise an electrical load of a building to which the elevator system belongs like a building communication system or a building lighting system etc. Without a failure of an AC power source, those elevator door operators, elevator lightings, the building communication system or building lightings can be powered by the AC power source, while, when there is a failure of the AC power source, they can be powered by the elevator system.

According to a further embodiment, regenerated power by the electric motor may be supplied to the common DC bus via the power inverter, so that the regenerated power can be used for driving the AC load. According to a further embodiment, the power management system further comprises a dynamic braking resistor (DBR) coupled to the common DC bus. When current flows through the DBR in regenerative mode, excess energy can be dissipated through the DBR as necessary. A plurality of dynamic braking resistors may be connected serially or in parallel.

According to a further embodiment, the power management system may further comprise a supercapacitor stack coupled to the common DC bus, so that excessive power in the common DC bus can be stored in the supercapacitor stack. The supercapacitor stack may comprise a single supercapacitor or a plurality of supercapacitors connected serially or in parallel.

According to a further embodiment, the second power source may be a DC battery. According to a further embodiment, the power management system may comprise an alternative power source which is coupled to the common DC bus and configured to provide AC or DC power. The alternative power source may comprise a solar panel, a fuel cell or a wind turbine etc.

In the following exemplary embodiments of the invention are described with reference to the enclosed figures.
Fig. 1 is a block diagram of a power management system to be used in an elevator system according to an exemplary embodiment of the invention.
Fig. 2 is a block diagram depicting a structure of a controller according to an exemplary embodiment of the present invention.

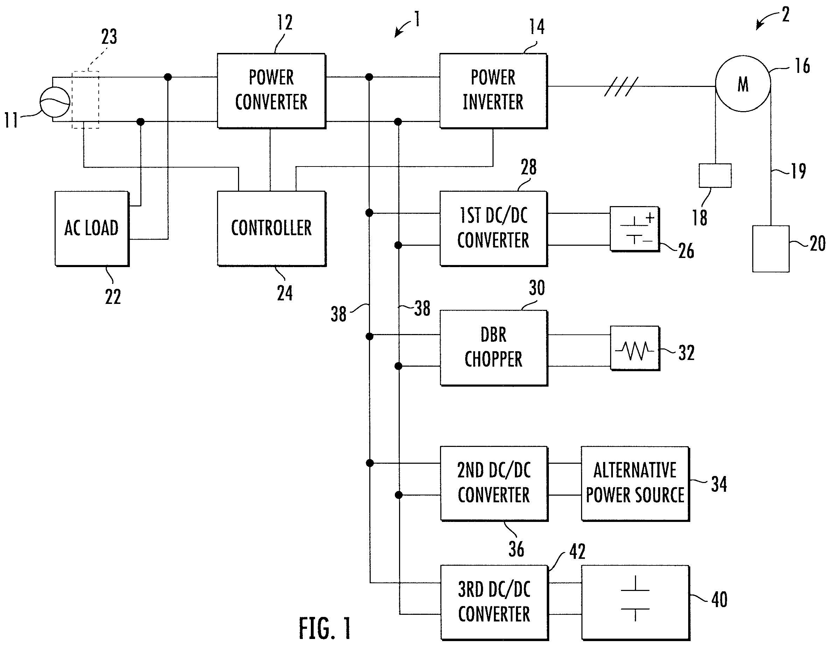

Fig. 1 is a block diagram of a power management system 1 to be used in an elevator system 2 according to an exemplary embodiment of the invention.

The power management system 1 shown in Fig. 1 comprises an AC power source 11, a power converter 12, a power inverter 14, an AC load 22, a contactor 23, a controller 24, a DC power source 26, a first DC/DC converter 28, a dynamic braking resistor (DBR, 32), a DBR chopper 30, a second DC/DC converter 36, an alternative power source 34, and a common DC bus 38. The power management system 1 may further comprise a supercapacitor stack 40 which is coupled to the common DC bus 38 via a third DC/DC converter 42.

The elevator system 2 shown in Fig. 1 comprises an electric motor 16, a counterweight 18, a rope 19, and an elevator car 20. The electric motor 16 is provided with AC power from the power inverter 14 to drive the elevator car 20 and the counterweight 18 which are connected via the rope 19. The AC power supplied to the electric motor 16 may be a single-phase or three-phase AC power provided by the power inverter 14, e.g. by pulse width modulation (PWM) from the DC power in the common DC bus 38.

The electric motor 16 is capable of operating in a motoring mode or in a regenerative mode. When the electric motor 16 operates in the motoring mode, the power management system 1 is configured to drive the electric motor 16 based on the single-phase AC power supplied by the AC power source 11. Yet, each of the DC power source 26, the supercapacitor stack 40, and the alternative power source 34 can also be a power source providing the electric motor 16 with the driving power. Namely, the electric motor 16 can be driven by electric power supplied by a combination of the AC power source 11, the DC power source, and/or the supercapacitor stack 40. The DC power source 26 may comprise at least one secondary or rechargeable DC battery. The alternative power source 34 may comprise a solar panel, a fuel cell, a wind turbine, or other power generating devices.

When the electric motor 16 operates in the regenerative mode, regenerated electric power may be delivered to at least one of the AC power source 11, the DC power source 26 or the supercapacitor stack 40.

The DC power source 26, the alternative power source 34, and the supercapacitor stack 40 may be coupled to the common DC bus 38 via the first DC/DC converter 28, the second DC/DC converter 36, and the third DC/DC converter 42, respectively. The first to third DC/DC converters 28, 36, 42 are optional and may provide for conversion of different voltage levels between each power source 26, 34, 40 and the common DC bus 38. In this way, the DC power source 26 and the alternative power source 34 can supply DC power to the common DC bus 38 as necessary.

The power inverter 14 may be a three-phase power inverter that is configured to invert the DC power from the common DC bus 38 to three-phase AC power to be delivered to the electric motor 16 to impart motion to the elevator car 20 in a motoring mode. In one example, this power conversion from DC power to three-phase AC power may be done by operating switches connected in three bridge circuits in the power inverter 14, e.g. such as to apply a pulse width modulation (PWM) power conversion scheme. The power inverter 14 can operate in a bidirectional way, so that in the regenerative mode AC power regenerated by the electric motor 16 is converted by the power inverter 14 to DC power to be delivered to the common DC bus 38.

The power inverter 14 comprises a plurality of power switches to generate drive for the electric motor 16. The power switches may be insulated gate bipolar transistors (IGBTs) or metal-oxide-semiconductor field-effect transistors (MOSFETs) transistors, but other types of power switches may be used as well. Each power switch normally includes a flybackdiode across its drain-source terminals. The flyback diode can be called a freewheeling diode or an antiparallel diode. The power switches are arranged in phase legs, each phase leg connected between the positive and negative poles of the common DC bus 38. An AC terminal is provided at a junction (e.g., source-drain junction) of the power switches in each phase leg. The AC terminal provides the output of the respective phase leg of the power inverter 14. The AC terminals are coupled to respective motor windings of the electric motor 16. In an exemplary embodiment, the electric motor 16 is a three-phase, permanent magnet synchronous motor. The power inverter 14 may be a three-phase inverter and the electric motor 16 may be a three-phase motor, but embodiments are not limited to a particular number of phases. The controller 24 may employ the PWM to produce gating pulses to periodically switch the power switches in the power inverter 14 to supply three-phase AC power to the electric motor 12. The speed and direction of movement of the elevator car 20 may be varied by adjusting the frequency and magnitude of the gating pulses provided with the power switches.

The power converter 12 may be a three-phase bidirectional power converter which is configured to convert the AC power supplied by the AC power source 11 to DC power. The three-phase power converter 12 may have a configuration corresponding to the configuration of the power inverter 14. Particularly, the three-phase power converter 12 may also comprise power switches arranged in phase legs, each phase leg connected between the positive and negative poles of the DC bus 38. Different to the power inverter 14, positive and negative poles of the DC bus 38 are coupled to the output of the phase legs of the three-phase power converter 12. A terminal provided at a junction (e.g., source-drain junction) of the power switches in each phase leg provides the input of the respective phase leg of the three-phase power converter 12. The three-phase power converter 12 may use power switches to convert DC power or AC power supplied to its input to a DC voltage supplied at its output. Power switches may also be IGBTs or MOSFETs, but other types of power switches may be used. Each power switch normally includes a freewheeling diode across its drain-source terminals. Thus, the three-phase power converter 12 is an actively controlled three-phase power converter 12 which is capable of regenerating power from the DC bus 38 to the input side of the three-phase power converter 12, if desired.

In Fig. 1, the AC load 22 is connected between the AC power source 11 and the power converter 12. The AC power source 11 may be a single-phase or three-phase electrical power supplied from an electric power grid. In a normal mode, the AC load 22 is provided with AC power from the AC power source 11. On the other hand, in a power failure mode where the AC power source 11 fails to operate in a normal way, AC power supplied to the AC load 22 comes from the power converter 12. The controller 24 is configured to control the power converter 12 depending on the normal mode and the power failure mode.

The contactor 23 is configured to connect or disconnect the AC power source 11 to or from the power converter 12 upon receiving an instruction from the controller 24.

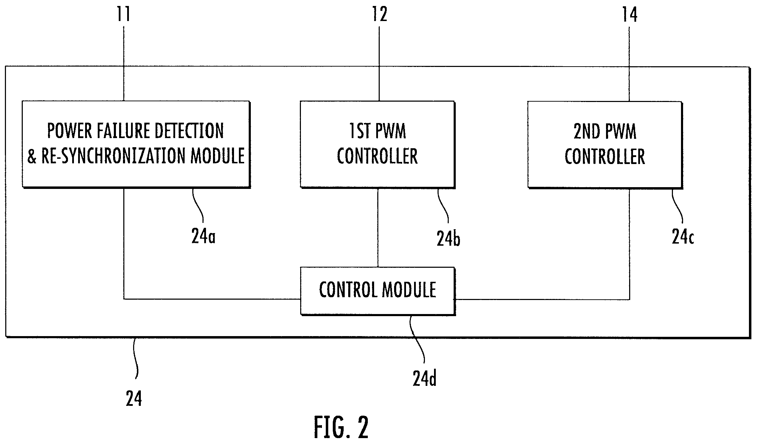

Fig. 2 is a block diagram depicting a structure of the controller 24 according to an exemplary embodiment of the present invention.

Referring to Fig. 2, the controller 24 comprises a power failure detection & re-synchronization module 24a, a first PWM controller 24b, a second PWM controller 24c, and a control module 24d. The power failure detection & re-synchronization module 24a is coupled to the AC power source 11 to detect a failure and recovery of the AC power source 11. The first PWM controller 24b and the second PWM controller 24c are coupled to the power converter 12 and the power inverter 14, respectively. They are configured to generate PWM pulses to control the power converter 12 and the power inverter 14, respectively.

The control module 24d is configured to control operations of the power failure detection & re-synchronization module 24a, the first PWM controller 24b, and the second PWM controller 24c. In particular, in the normal mode, i.e. when the AC power source 11 operates without failure, the control module 24d directs the first PWM controller 24b to generate PWM pulses for converting AC power from the AC power source 11 to DC power to be delivered to the common DC bus 38. In the power failure mode, i.e., when the power failure detection & re-synchronization module 24a has detected a failure of the AC power source 11, the controller 24 instructs the contactor 23 to disconnect the AC power source 11 from the power converter. In addition, during the power failure mode, the control module 24d directs the first PWM controller 24b to generate PWM pulses for allowing the power converter 24b to convert the DC power on the common DC bus 38 into AC power to be delivered to the AC load. Namely, during the power failure mode, the power converter 12 can be used to form a microgrid or a local grid. The AC load 22 may be an electrical load of the elevator system like an elevator door operator, an elevator lighting system or an auxiliary supply etc. The AC load 22 may be an electrical load of a building to which the elevator system belongs, such as a building communication system or a building lighting system etc.

When the power failure detection & re-synchronization module 24a detects a recovery of the AC power source 11, the controller 24 sends an instruction to the contactor 23 to recover a connection between the AC power source 11 and the power converter 12. The recovery of the AC power source 11 can be detected by applying a grid synchronization method.

The control module 24d may enable the second PWM controller 24c to generate PWM pulses for allowing the power inverter 14 to operate according to the motoring mode, the regenerative mode or a braking mode. Particularly, during the motoring mode, the second PWM controller 24c generates PWM pulses to control power switches in the power inverter 14 to apply AC power to the electric motor 16 to impart motion to the elevator car 20. During the regenerative mode, the second PWM controller 24c generates PWM pulses to allow the power switches to convert AC power from the electric motor 16 to DC power to be delivered to at least one of the AC power source 11, the DC power source 26, or the supercapacitor stack 40. The regenerative mode may occur when an empty or only lightly loaded elevator car 20 is traveling upwards or when a fully or strongly loaded elevator car 20 is traveling downwards. In the braking mode, the second PWM controller 24c generates PWM pulses for allowing the power switches in the power inverter 14 to control the speed of the elevator car 20. The braking mode may ensue upon opening of a safety chain in the elevator, or other event. A speed sensor (e.g., a rotary encoder) mounted at the electric motor 16 or any other rotatable part of the drive machine may provide a speed signal to the controller 24 indicative of the rotational speed of the electric motor 16 or drive machine.

The controller 24 or the control module 24d may be implemented using a general-purpose microprocessor executing a computer program stored on a storage medium to perform the operations described herein. Alternatively, such controller 24 and control module 24d may be implemented in hardware (e.g., ASIC, FPGA) or in a combination of hardware/software. The controller 24 may also be part of an elevator control system.

During the regenerative mode, if the current produced at the electric motor 16 is excessive, the control module 24 may cause current flow through the dynamic braking resistor 32 in order to dissipate excess energy. In other words, when current flows through the dynamic braking resistor 32 in the regenerative mode, excess energy is dissipated through the dynamic braking resistor 32. A plurality of dynamic braking resistors 32 may be connected serially or in parallel.

According to exemplary embodiments of the invention, the integration of power sources for an elevator system and for other electrical systems of a building can be achieved. In particular, electrical power from a second power source of an elevator system , electrical power regenerated by an electrical motor of the elevator system, or a combination of both, can be utilized for driving electrical loads of the building when there is a failure of an AC power source. Thus, additional hardware and wiring are unnecessary for the electrical loads of the building and thus cost reduction can be achieved. In particular, a power converter of the elevator system can be redirected to AC loads during a failure of the AC power source and thereby allowing leveraging the power converter to form a microgrid or a local grid. In addition, according to exemplary embodiments of the invention, an elevator system can be utilized as an uninterruptible power supply or a microgrid former for the electrical loads of the building.

While the invention has been described with reference to exemplary embodiments, it will be understood by those skilled in the art that various changes may be made and equivalents may be substituted for elements thereof without departing from the scope of the invention. In addition, many modifications may be made to adopt a particular situation or material to the teachings of the invention without departing from the essential scope thereof. Therefore, it is intended that the invention is not limited to the particular embodiments disclosed, but that the invention includes all embodiments falling within the scope of the claims.

### References

- 1: power management system
- 2: elevator system
- 11: AC power source
- 12: power converter
- 14: power inverter
- 16: electric motor
- 18: counterweight
- 19: roping
- 20: elevator car
- 22: AC load
- 23: contactor
- 24: controller
- 24a: power failure detection & re-synchronization module
- 24b: first PWM controller
- 24c: second PWM controller
- 24d: control module
- 26: second power source
- 28: 1st DC/DC converter
- 30: DBR chopper
- 32: dynamic braking resistor
- 34: alternative power source
- 36: 2nd DC/DC converter
- 38: DC bus
- 40: supercapacitor stack
- 42: 3rd DC/DC converter

## Claims

1. A power management system (1) for an elevator system (2), the power management system (1) comprising:
a power converter (12) having input terminals coupled to an AC power source (11) supplying AC power to the power management system (1) and output terminals coupled to a common DC bus (38), the power converter (12) configured to convert the AC power from the AC power source (11) into DC power on the common DC bus (38) and vice versa;
an AC load (22) coupled to the input terminals of the power converter (12);
a second power source (26) for supplying DC power to the common DC bus (38);
a power inverter (14) configured to invert the DC power on the common DC bus (38) into AC output power for driving an electric motor (16) of the elevator system (2); and
a controller (24) configured to detect a failure of the AC power source (11) and, upon detection of the failure of the AC power source (11), to control the power converter (12) to invert the DC power on the common DC bus (38) into AC power to be supplied to the AC load (22) via the input terminals of the power converter (12).

2. The power management system according to claim 1, wherein the AC load (22) comprises at least one of an electrical load of the elevator system, an electrical load of a building to which the elevator system (2) belongs, or an additional AC-fed power conversion stage that supplies several loads.

3. The power management system according to claim 1 or 2, wherein the controller (24) is further configured to detect a recovery of the AC power source (11), and upon the detection of the recovery, to recover a connection between the AC power source (11) and the power converter (12).

4. The power management system according to claim 3, further comprising:
a contactor (23) configured to connect or disconnect the AC power source (11) to or from the power converter (12) upon receiving an instruction from the controller (24).

5. The power management system according to any of the preceding claims, further comprising a dynamic braking resistor (32) coupled to the common DC bus (38).

6. The power management system according to any of the preceding claims, further comprising a supercapacitor stack (40) coupled to the common DC bus (38).

7. The power management system according to any of the preceding claims, wherein the second power source (26) is a DC battery.

8. The power management system according to any of the preceding claims, further comprising an alternative power source (34) which is coupled to the common DC bus (38) and configured to provide AC or DC power.

9. The power management system according to claim 8, wherein the alternative power source (34) comprises a solar panel, a fuel cell or a wind turbine.

10. The power management system according to claim 6, wherein the supercapacitor stack (40) comprises a single supercapacitor or a plurality of supercapacitors connected serially or in parallel.

11. An elevator system (2) equipped with the power management system (1) according any of the preceding claims.

12. A method of power management in an elevator system (2), the method comprising:
supplying, by an AC power source (11), AC power to a power converter (12) of a power management system (1), the power converter (12) configured to convert the AC power into DC power on a common DC bus (38) of the power management system (1) and vice versa;
supplying, by the AC power source (11), AC power to an AC load (22) which is coupled between the AC power source (11) and the power converter (12);
detecting a failure of the AC power source (11); and
upon detection of the failure of the AC power source (11), controlling the power converter (12) to convert the DC power on the common DC bus (38) to AC output power to be supplied to the AC load (22).

13. A method according to claim 12, further comprising:
detecting a recovery of the AC power source (11); and
recovering a connection between the AC power source (11) and the power converter (12).

14. The method according to claim 12 or 13, further comprising supplying, by a second power source (26), DC power to the common DC bus (38).

15. The method according to any of claims 12-14, further comprising supplying, by an electrical motor (16) of the power management system (1), regenerated power to the common DC bus (38) via a power inverter (14) of the power management system (1),
particularly wherein the AC load (22) comprises at least one of an electrical load of the elevator system, an electrical load of a building to which the elevator system (2) belongs, or an additional AC-fed power conversion stage that supplies several loads.
